Europäisches Patentamt

European Patent Office

Office européen des brevets

(19)

(11) Veröffentlichungsnummer: **0 189 823**
**A2**

(12) # EUROPÄISCHE PATENTANMELDUNG

(21) Anmeldenummer: 86100733.4

(22) Anmeldetag: 21.01.86

(51) Int. Cl.⁴: **H 03 M 13/00**
//G06F11/10

(30) Priorität: 26.01.85 DE 3502676

(43) Veröffentlichungstag der Anmeldung:
06.08.86 Patentblatt 86/32

(84) Benannte Vertragsstaaten:
DE FR GB IT

(71) Anmelder: Rohde & Schwarz GmbH & Co. KG
Mühldorfstrasse 15
D-8000 München 80(DE)

(72) Erfinder: Wessel, Anton
Trausnitzstrasse 36
D-8000 München 80(DE)

(72) Erfinder: Kühn, Gerd
Parksiedlung 21
D-8011 Poing(DE)

(74) Vertreter: Graf, Walter
Sckellstrasse 1
D-8000 München 80(DE)

(54) **Verfahren zur Übertragung von digitalen Informationen.**

(57) Zur Erhöhung der Abhörsicherheit bei der Übertragung von digitalen Informationen wird der verwendete Fehlererkennungs- und Fehlerkorrektur-Code (edac-code) während der Informationsübertragung fortlaufend geändert (edac-code-hopping).

# Patentanwalt Dipl.-Ing. Walter Graf

European Patent Attorney

Sckellstraße 1
D-8000 München 80
Telefon (089) 4 48 08 67

Telex 5 214 382 pali d
Telekopierer (089) 40 88 41
Postscheck München 1828 26-804
Deutsche Bank München 3 402 039

1075-EU

ROHDE & SCHWARZ GmbH & Co KG  8000 München 80


## Verfahren zur Übertragung von digitalen Informationen

Die Erfindung betrifft ein Verfahren laut Oberbegriff des Hauptanspruches.

Bei der Übertragung von Nachrichten oder anderen Informationen von einem Sender zu einem Empfänger beispielsweise über einen Funkkanal ist es bekannt, die in Klartext vorliegende Nachricht nach einem vorbestimmten Algorithmus unter Zuhilfenahme eines bestimmten kryptographischen Schlüssels (Cryptographic key) in eine entsprechend verschlüsselte Nachricht umzuwandeln, um hierdurch ein unberechtigtes Abhören und Auswerten der Nachricht zu verhindern (Cryptography: A new dimension in computer data security, Wiley, New York, 1982, Seiten 66,67,300 bis 303). Bei dieser Umwandlung einer Information in eine verschlüsselte digitale Information werden nur soviel Bits verwendet wie für die Information nötig sind. Bei diesem Verschlüsselungsverfahren ist es ferner bekannt, den kryptographischen Schlüssel, nach welchem die Nachricht verschlüsselt wird, nach einem bestimmten Zeitschema sowohl auf der Sendeseite als auch auf der Empfangsseite gleichzeitig zu ändern. Hierdurch wird es für einen unbefugten Abhörer erschwert, den Schlüssel zu erkennen und die Nachricht zu interpretieren und auszuwerten.

Bei der Übertragung von digitalen Informationen, die gegebenenfalls nach dem eingangs erwähnten Verfahren verschlüsselt sind, können auf der Übertragungsstrecke, beispielsweise bei Übertragung auf einem Kurzwellenkanal, Fehler entstehen, und zwar hervorgerufen durch natürliche oder durch bewusste Fremdstörungen. Auf der Empfangsseite wird dann die digitale Information falsch interpretiert und falsch ausgewertet. Um eine solche Verfälschung der Information empfangsseitig zu erkennen und gegebenenfalls sogar zu korrigieren, ist es bekannt, die digitale Information vor dem Aussenden zusätzlich noch mit einem Fehler-Erkennungs- und Korrektur-Code (error detection and correction code, edac-code) zu codieren und die übertragene digitale Information empfangsseitig mit dem gleichen Fehler-Erkennungs- und Korrektur-Code (edac-code) zu decodieren (Swoboda, Codierung zur Fehlerkorrektur und Fehlererkennung, Oldenbourg-Verlag, München; Wesley Peterson, prüfbare und korrigierbare Codes, Oldenbourg-Verlag, München; Kohlenberg, Forney, Convolutional Coding for Channels with Memory, IEEE Transactions on information Theory, September 1968, Seiten 618 bis 626). Hierzu werden im Sender und im Empfänger entsprechende Fehlerkorrekturgeräte (forward error correction coding equipment, feccoding) vorgesehen, in welche der zu benutzende edac-Code vor der eigentlichen Nachrichtübertragung fest eingegeben ist und auch während der Nachrichtenübertragung unverändert bleibt. In der Literatur wird eine Vielzahl solcher edac-Codes beschrieben. Gemeinsam ist diesen edac-Codes, dass sie auf jeden Fall mehr Bits enthalten als an sich für die Darstellung der Information nötig ist, d.h. all diese edac-Codes weisen eben den eigentlichen Informationsbits für die Darstellung der Information zusätzliche Prüfbits (parity bits) auf.

Da bei den bekannten Fehlerkorrekturgeräten der edac -Code fest eingegeben ist und während der Nachrichtenübertragung nicht geändert wird, besteht die Gefahr, dass ein geschickter Abhörer den verwendeten edac -Code feststellt. Wenn er dann auch noch die Verschlüsselung der übertragenen Information kennt, kann er die Nachricht interpretieren und auswerten. Er kann dann beispielsweise nach dem gleichen edac-Code auf dem gleichen Funkkanal Störinformationen aussenden, die dann empfangsseitig nicht als solche erkannt werden und dann zu Fehlinformationen führen.

Es ist Aufgabe der Erfindung, ein Verfahren zur Übertragung von digitalen Informationen aufzuzeigen, bei welchem die Sicherheit erhöht ist, dass eine Information von Unbefugten abgehört und ausgewertet wird.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Bei dem erfindungsgemässen Verfahren wird während der eigentlichen Nachrichtenübertragung nach einem vorbestimmten Schema der edac-Code geändert, d.h. es wird während der Nachrichtenübertragung schnell zwischen unterschiedlichen edac -Codes umgeschaltet (edac-code-hopping). Dabei können die verschiedenartigsten Parameter des verwendeten edac-Codes geändert werden. Im einfachsten Fall kann bei gleichbleibendem Verhältnis von Informationsbits zu Prüfbits (code rate) nur die Codiervorschrift geändert werden. Darüber hinaus kann aber auch das Verhältnis von Informationsbits zu Prüfbits erhöht und/oder die Codiervorschrift geändert werden. Dabei kann zur Erhöhung der Abhörsicherheit das Verhältnis Informationsbits zu Prüfbits nicht nur entsprechend den Erfordernissen für die Fehlererkennung und Fehlerkorrektur gewählt werden, wie dies bisher bei den edac-Codes der Fall ist, sondern über die erforderliche Anzahl von Prüfbits hinaus kann die Anzahl noch weiter erhöht werden, um im Sinne der Erfindung das Abhören zu erschweren. Eine andere Möglichkeit der Änderung des edac-Codes ist die Änderung der hierbei angewandten Codespreizung (interleaving). Auch die Anzahl und Zeitdauer der Wiederholungen kann bei Anwendung einer Wiederholungsmethode geändert werden. Bei Anwendung eines Blockcodes kann beispielsweise auch die Blocklänge geändert werden. Unter Änderung des edac-Codes im Sinne der Erfindung wird also jede Änderung des verwendeten Codetyps und der Codeparameter verstanden, wie sie bei solchen Fehlerkorrekturgeräten benutzt werden. Es ist lediglich erforderlich, dass die jeweils vorgenommene Änderung auf der Senderseite und Empfangsseite gleichzeitig vorgenommen wird, was entweder nach einem sende- und empfangsseitig bekannten Zeitplan oder nach entsprechender Absprache zwischen Sender und Empfänger im gegenseitigen Dialog erreicht werden kann.

Das erfindungsgemässe Verfahren kann alleine oder zusammen mit anderen bekannten Verfahren zur Verhinderung des Abhörens und Auswertens einer digitalen Information angewendet werden, beispielsweise zusammen mit einem bekannten eingangs erwähnten Verschlüsselungsverfahren. Damit
kann die Abhörsicherheit noch erhöht werden. Das erfindungsgemässe Verfahren kann beispielsweise auch zusammen
mit einem bekannten Frequenzumtastverfahren (frequency
hopping) angewendet werden, bei welchem nach einem senderseitig und empfangsseitig bekannten Zeitplan während der
Nachrichtenübertragung die jeweils benutzte Übertragungsfrequenz geändert wird.

Mit dem erfindungsgemässen Verfahren wird nicht nur das
Abhören und Auswerten einer digitalen Information verhindert
sondern es wird damit auch verhindert, dass ein Störsender
auf dem gleichen Kanal mit dem gleichen edac-Code eine Störinformation aussendet, die empfangsseitig dann nicht als
solche erkannt wird.

Die Änderung des edac-Codes während der Nachrichtenübertragung in der Sendestation und Empfangsstation setzt voraus,
dass dies sehr genau und gleichzeitig erfolgt, damit kein
Informationsverlust auftritt. Im einfachsten Fall erfolgt
die Änderung nach einem bestimmten Zeitplan, der senderseitig und empfangsseitig bekannt ist und nach welchem
gesteuert durch entsprechende genaue Uhren die Änderung
des edac-Codes automatisch während der Nachrichtenübertragung durchgeführt wird. Eine andere Möglichkeit ist, während
der Nachrichtenübertragung im Dialog zwischen Sendestation
und Empfangsstation vorzugsweise unter Berücksichtigung
der jeweiligen Übertragungsgüte der verwendeten Übertragungskanäle den Zeitpunkt einer edac-Code-Änderung festzulegen.
Dazu kann beispielsweise empfangsseitig durch stichpunktartige oder fortlaufende Überprüfung der Kanalqualität
(Untersuchung des Übertragungskanals auf eventuelle Störungen oder dergleichen) festgestellt werden, ob ein verwendeter Übertragungskanal noch ausreichende Übertragungsgüte besitzt; wenn nicht, kann durch eine entsprechende Mitteilung zur Sendestation eine entsprechende edac-Code-Änderung vereinbart werden, die eine bessere Übertragungsqualität ermöglicht. Die erfindungsgemäss vorgeschlagene edac-Code-Änderung während der Nachrichtenübertragung kann damit gleichzeitig auch zur Erhöhung der Übertragungsqualität benutzt werden.

Die fortlaufende edac-Code-Änderung während der Nachrichtenübertragung erfolgt so schnell und häufig wie dies der verwendete Codierungsalgorithmus ermöglicht, damit die Abhörsicherheit so gross wie möglich ist. Im Extremfall kann beispielsweise bei Anwendung einer Blockcodierung sogar jeweils von Codierblock zu Codierblock die edac-Codierung geändert werden.

Patentanwalt Dipl.-Ing. Walter Graf

European Patent Attorney

Eckellstraße 1
D-8000 München 80
Telefon (089) 4 48 06 67
0189823

Telex 5 214 382 pali d
Telekopierer (089) 40 89 41
Postscheck München 1828 26-804
Deutsche Bank München 3 402 039

1075-EU

Patentansprüche

1. Verfahren zur Übertragung von digitalen Informationen, bei dem die digitale Information senderseitig mit einem Fehlererkennungs- und Fehlerkorrektur-Code (edac-Code) codiert wird, der neben den eigentlichen Informationsbits zusätzliche Prüfbits aufweist, bei dem empfangsseitig die codierte Information mit dem gleichen edac-Code decodiert wird, dadurch g e k e n n - z e i c h n e t, dass der edac-Code während der Informationsübertragung sende- und empfangsseitig fortlaufend gleichzeitig geändert wird.

2. Verfahren nach Anspruch 1, dadurch g e k e n n - z e i c h n e t, dass die Änderung des edac-Codes nach einem vorbestimmten Zeitplan erfolgt.

3. Verfahren nach Anspruch 1 oder 2, dadurch g e k e n n - z e i c h n e t, dass die Änderung des edac-Codes nach Absprache im gegenseitigen Dialog zwischen Sendestation und Empfangsstation erfolgt.

4. Verfahren nach einem der vorhergehenden Ansprüche, dadurch g e k e n n z e i c h n e t, dass bei der Änderung des edac-Codes das Verhältnis der Anzahl der Prüfbits zur Anzahl der Informationsbits geändert wird.

- 2 -

5. Verfahren nach Anspruch 4, dadurch  g e k e n n -
   z e i c h n e t, dass bei der Änderung des edac-Codes
   das Verhältnis der Anzahl der Prüfbits zur Anzahl der
   Informationsbits auf einen Wert erhöht wird, der über
   demjenigen Wert liegt, der zur eigentlichen Fehlererkennung und Fehlerkorrektur nötig ist.